# EUROPÄISCHE PATENTSCHRIFT

(11) **EP 2 324 099 B1**
(45) Veröffentlichungstag und Bekanntmachung des Hinweises auf die Patenterteilung: **21.11.2018**
(21) Anmeldenummer: 09814118.7
(22) Anmeldetag: 17.09.2009
(51) Int. Cl.: C10G 1/02, C10G 3/00, C10G 9/00

(54) **VERFAHREN ZUR GEWINNUNG VON BRENN- BZW. TREIBSTOFFEN**
METHOD FOR PREPARING FUEL OR COMBUSTIBLE FUEL
PROCÉDÉ D'OBTENTION DE CARBURANTS

(30) Priorität: 17.09.2008 EP 08450140
(43) Veröffentlichungstag der Anmeldung: 25.05.2011
(73) Patentinhaber: BDI Holding GmbH, 8074 Grambach (AT)
(72) Erfinder: GOESSLER, Helmut, A-8042 Graz (AT); HAMMER, Wilhelm, 8052 Graz (AT)
(74) Vertreter: Schwarz, Albin
(86) Internationale Anmeldenummer: PCT/EP2009/062037
(87) Internationale Veröffentlichungsnummer: WO 2010/031803

(56) Entgegenhaltungen:
- DE-A1- 10 215 679
- US-A- 4 266 083
- US-A- 4 941 966
- US-A1- 2007 261 996

## Beschreibung

Die Erfindung betrifft ein Verfahren zur Gewinnung eines Brenn- bzw. Treibstoffes durch thermisches Cracken eines Schweröls in Gegenwart von feuchter, kohlenwasserstoffhältiger Biomasse, indem das Schweröl bis zur Pyrolyse der kohlenwasserstoffhältigen Biomasse erhitzt wird, wobei die Brenn- bzw. Treibstoffe gebildet, aus dem erhitzten Schweröl entfernt und anschließend kondensiert werden, wobei eine kohlenwasserstoffhältige Biomasse eingesetzt wird, deren Feuchtigkeitsgehalt maximal 1,0 Gew.-%, bezogen auf die Biomasse, beträgt und durch Trocknen in einem erhitzten Schweröl, vorzugsweise Vakuumgasöl, bei Temperaturen bis maximal 200°C eingestellt wurde.

Aus der Literatur ist bekannt, dass bei einer Flüssigphasenpyrolyse biogenes Einsatzmaterial in einem Trägeröl bei Temperaturen bei etwa 300°C bis 350°C zur Gewinnung eines Pyrolyseöls umgesetzt wird. Dabei werden meist als inert bezeichnete Trägeröle wie beispielsweise Thermoöle verwendet, welche thermisch sehr belastbar sind und möglichst nicht an der Pyrolyse-Reaktion der Biomasse teilnehmen.

Nachteilig an diesen Verfahren ist, dass thermisch belastbare Trägeröle teuer sind und sehr aufwändig von Pyrolyserückständen gereinigt werden müssen, bevor sie nochmalig zur Flüssigphasenpyrolyse eingesetzt werden können. Eine gänzlich verlustfreie Reinigung bzw. Abtrennung derartiger Trägeröle von den Pyrolyserückständen ist allerdings unter wirtschaftlichen Gesichtspunkten nicht möglich. Die Produktionskosten derartiger Verfahren sind daher aufgrund des erhöhten Trägerölverbrauchs sowie der erforderlichen Katalysatoren meist unwirtschaftlich für die Gewinnung von Brenn- bzw. Treibstoffen.

In der US 2007/0261996 A1 wird ein Verölungsverfahren für Biomasse unter Verwendung eines als Kontaktöl bezeichneten Trägeröls gezeigt. Das Trägeröl hat einen Siedebeginn von mindestens 200°C, im genannten Ausführungsbeispiel wird als Trägeröl herkömmliches Schweröl verwendet. Als biogenes Ausgangsmaterial kann bei diesem Verölungsverfahren jegliche zuckerhältige Biomasse, beispielsweise Holz oder Stroh, mit einem Feuchtigkeitsgehalt von bis zu 30 Gew.-% eingesetzt werden. Vor dem Kontakt mit dem Trägeröl wird die Biomasse auf eine Temperatur zwischen 40°C und maximal 150°C erwärmt und gelangt vorgewärmt in einen Reaktorraum. Im Reaktorraum wird die Biomasse mit dem vorgelegten heißen Trägeröl kontaktiert und bei Reaktionstemperaturen zwischen 200°C und 600°C gespalten. Die Reaktionsphase wird in einem anschließenden Aufarbeitungsschritt in eine Leichtsiede- und eine Schwersiedefraktion aufgetrennt, wobei die Schwersiedefraktion zumindest teilweise wieder als Trägeröl eingesetzt wird.

Nachteilig an diesem Verölungsverfahren ist, dass die feuchte Biomasse direkt im Reaktorraum mit dem heißen Trägeröl kontaktiert wird. Es erfolgt dabei weder eine Vortrocknung oder ein Vorkontakt der Biomasse mit dem vorgewärmten Trägeröl außerhalb des Reaktorraums, um den Feuchtigkeitsgehalt der Biomasse möglichst schonend zu reduzieren, noch ist eine Bestimmung des Feuchtigkeitsgehalts der Biomasse vor der Zufuhr in den Reaktorraum vorgesehen. Die in der Biomasse enthaltene Feuchte führt im Reaktorraum zu einer unerwünschten, erhöhten Wasserdampfbildung und somit zu einer verringerten Produktausbeute bzw. verminderten Produktqualität.

Weiters ist bei diesem Verölungsverfahren die Zugabe eines Feststoffkatalysators, beispielsweise eines Katalysatormolekularsiebes, in die Reaktionsphase vorgesehen. Die Betriebskosten sind daher gegenüber katalysatorfreien Verölungsverfahren erhöht.

In DE 102 15 679 ist ein Verfahren zur direkten thermochemischen Umwandlung von hochmolekularen organischen Substanzen in hochwertige niedermolekulare organische Produkte, die bei Raumtemperatur als niedrigviskose Flüssigkeiten vorliegen und brennbar sind, beschrieben. Als grundlegender Faktor der Erfindung ist eine Schockerwärmung in Kombination mit einer Kreislaufführung schwerflüchtiger Produktfraktionen beschrieben, wobei lediglich mechanisch entfernbare Wasseranteile vorher zu isolieren sind.

Es ist somit die Aufgabe der vorliegenden Erfindung ein Verfahren zur Gewinnung eines Brenn- bzw. Treibstoffes durch thermisches Cracken eines Schweröls in Gegenwart von feuchter, kohlenwasserstoffhältiger Biomasse anzugeben, das die geschilderten Nachteile des Standes der Technik vermeidet und mit dem ein möglichst hoher Anteil an kürzerkettigen Kohlenwasserstoffen in den Spaltprodukten erzielt wird.

Diese Aufgabe wird bei einem Verfahren zur Gewinnung eines Brenn- bzw. Treibstoffes gemäß dem Oberbegriff des Anspruches 1 mit den Merkmalen des kennzeichnenden Teiles des Anspruchs 1 gelöst. Die Unteransprüche betreffen weitere vorteilhafte Ausgestaltungen der Erfindung.

Das erfindungsgemäße Verfahren ist ein Verfahren zur Gewinnung eines Brenn- bzw. Treibstoffes durch thermisches Cracken eines Schweröls in Gegenwart von feuchter, kohlenwasserstoffhältiger Biomasse mit einen Feuchtigkeitsgehalt von maximal 1,0 Gew.-%, indem das Schweröl bis zur Pyrolyse der kohlenwasserstoffhältigen Biomasse erhitzt wird, wobei die Brenn- bzw. Treibstoffe gebildet, aus dem erhitzten Schweröl entfernt und anschließend kondensiert werden, das dadurch gekennzeichnet ist, dass eine kohlenwasserstoffhältige Biomasse eingesetzt wird, die einer Trocknung unterzogen wird, um einen Feuchtigkeitsgehalt von maximal 1,0 Gew.-%, bezogen auf die Biomasse, zu gewährleisten.

Als Schweröle können beispielsweise mineralische Öle, insbesondere schwer siedende Rückstandsöle aus der Mineralölraffination, genauso wie pflanzliche oder tierische Fette und Öle sortenrein oder in Mischungen eingesetzt werden. Derartige Schweröle beginnen vorzugsweise erst bei Temperaturen über 250°C zu sieden.

Ebenso ist es denkbar, Abfall- oder Nebenprodukte aus der Pflanzenölraffination, beispielsweise Palm Fatty Acid Distillate (PFAD), als Schweröle im erfindungsgemäßen Gewinnungsverfahren einzusetzen.

Als kohlenwasserstoffhältige Biomasse können sowohl zellulosehaltige biogene Materialien, beispielsweise Holz, Stroh, Zellstoff oder Fruchtkerne, als auch biogenes Material, das frei von Zellulose ist, beispielsweise Algenrückstände, Knochen- oder Tiermehl oder Klärschlamm, eingesetzt werden. Auch Pressrückstände aus der Pflanzenölgewinnung, beispielsweise Rapspresskuchen, können erfindungsgemäß als kohlenwasserstoffhältige Biomasse verwertet werden.

Es ist vorteilhaft, wenn die kohlenwasserstoffhältige Biomasse eine möglichst geringe Stickstoffbelastung aufweist. Dadurch wird verhindert, dass N₂ in die Treibstoffphase eingetragen wird.

In einer bevorzugten Ausführungsform wird bei einem erfindungsgemäßen Verfahren eine kohlenwasserstoffhältige Biomasse eingesetzt, deren Feuchtigkeitsgehalt maximal 0,5 Gew.-%, bezogen auf die Biomasse, beträgt.

Zweckmäßig ist bei einem Verfahren die Biomasse maximal zu 30 Gew.-% im Schweröl, bezogen auf die Gesamtmasse, enthalten.

In einer Variante ist bei einem Verfahren die Biomasse maximal zu 20 Gew.-% im Schweröl, bezogen auf die Gesamtmasse, enthalten.

In einer weiteren Variante eines Verfahrens ist die Biomasse unter 5 Gew.-% im Schweröl, bezogen auf die Gesamtmasse, enthalten.

Der Gehalt an Biomasse im Schweröl beträgt zumindest 0,001 Gew.-%, bezogen auf die Gesamtmasse.

Überraschenderweise wurde festgestellt, dass beim erfindungsgemäßen Verfahren bereits ein kleinerer Anteil an Biomasse im Schweröl zum Cracken des Schweröls führt. Große Mengen billiger Abfall- bzw. Rückstandsöle, die sonst meist aufwändig zu entsorgen wären, können somit als Schweröle unter Einsatz vergleichsweise kleiner Mengen an Biomasse zur Gewinnung eines Brenn- bzw. Treibstoffes verwertet werden. Somit bietet das erfindungsgemäße Verfahren einen weiteren Vorteil gegenüber aus dem Stand der Technik bekannten Verölungsverfahren, die einen möglichst hohen Anteil an umzusetzender bzw. zu spaltender Biomasse bezwecken.

Vorteilhafterweise wird bei einem Verfahren das Schweröl auf eine Temperatur zwischen 250°C und 450°C erhitzt.

Besonders vorteilhaft wird bei einem erfindungsgemäßen Verfahren das Schweröl auf eine Temperatur zwischen 320°C und 400°C erhitzt.

Eine Variante der Erfindung sieht vor, dass bei einem Verfahren als Schweröl ein Rückstandsöl aus der Erdöldestillation, insbesondere Vakuumgasöl, eingesetzt wird.

Überraschenderweise wurde festgestellt, dass bei der Verwendung von Rückstandsölen oder Schwerölen aus der Erdöldestillation, insbesondere bei Vakuumgasöl (VGO), nicht nur die Biomasse pyrolysiert, sondern auch das Schweröl unter Bildung von kürzerkettigen Kohlenwasserstoffen zumindest teilweise gespalten wird, und dass auf diese Weise eine zusätzliche Wertschöpfung für das gesamte Verfahren erzielt werden kann.

Dieses VGO ist ein Rückstandsöl, das bei der Erdöldestillation als Sumpfprodukt anfällt. Üblicherweise wird VGO als Einsatzprodukt für einen Cracker (thermischer oder katalytischer Cracker) verwendet, um daraus kurzkettige Kohlenwasserstoffe zu gewinnen. Beim thermischen Cracken werden je nach Verfahren Temperaturen bis zu 800°C bzw. Drücke bis 5 bar benötigt, um die Rückstandsöle aufzuspalten. Dazu verglichen werden beim katalytischen Cracken Katalysator-Temperaturen bis 550°C verwendet und eine Reaktivierung des Katalysators ist vonnöten.

Vorteilhaft beim hier beschriebenen erfindungsgemäßen Verfahren sind die mit den herkömmlichen Crackprozessen verglichen milden Reaktionsbedingungen von etwa 350°C Reaktortemperatur bei Normaldruck, die zum Spalten des VGO benötigt werden. Es hat sich gezeigt, dass im erfindungsgemäßen Verfahren das VGO bereits bei erheblich niedrigeren Temperaturen zu kürzerkettigen Kohlenwasserstoffen gespalten wird, als dies beim üblichen thermischen Cracken der Fall ist. Dies weist darauf hin, dass der Einsatz der Biomasse die Cracktemperatur des VGO herabsetzt.

Besonders vorteilhaft wird bei einem erfindungsgemäßen Gewinnungsverfahren eine kohlenwasserstoffhältige Biomasse eingesetzt, deren Feuchtigkeitsgehalt durch Trocknen in einem erhitzten Schweröl, vorzugsweise Vakuumgasöl, eingestellt wurde.

Durch Trocknen der feuchten Biomasse in einem erhitzten Schweröl wird vorteilhaft der Feuchtigkeitsgehalt der Biomasse schonend reduziert und die Biomasse bereits mit dem Schweröl kontaktiert. Die Trocknung der mit Schweröl getränkten Biomasse erfolgt bei Temperaturen von rund 150°C, maximal bis 200°C. Die dabei aus der Biomasse austretende Feuchte wird beispielsweise in einem Kondensator gesammelt und abgetrennt. Anschließend wird die mit Schweröl getränkte Biomasse weiter aufgeheizt bzw. mit siedendem Schweröl in Kontakt gebracht und das Schweröl in Anwesenheit der Biomasse gecrackt.

In einer weiteren Ausführungsform wird bei einem erfindungsgemäßen Verfahren die Biomasse nach dem Trocknen durch ein Trennverfahren vom überschüssigen Schweröl getrennt, wobei die Biomasse im Schweröl über 15 Gew.-%, vorzugsweise über 25 Gew.-%, bezogen auf die Gesamtmasse, enthalten ist.

Durch ein Trennverfahren zum Abtrennen des überschüssigen Schweröls wird verhindert, dass ein zu hoher Anteil an Schweröl nach dem Trocknen gemeinsam mit der Biomasse in nachfolgende Prozessschritte gelangt, welche bei höheren Temperaturen als der Trocknungstemperatur betrieben werden und durch das zugeführte Schweröl zu stark gekühlt werden. Als Trennverfahren zur Abtrennung des überschüssigen Schwerölanteils von der Biomasse sind beispielsweise mechanische Trennverfahren, insbesondere Sedimentations- bzw. Zentrifugalverfahren, Filtrationsverfahren oder Pressverfahren, vorgesehen.

Weitere Merkmale der Erfindung ergeben sich aus der nachfolgenden Beschreibung von Ausführungsbeispielen und unter Bezugnahme auf die Zeichnungen.

Es zeigen:
- Fig. 1 in stark vereinfachter Darstellung ein Verfahrensschema einer ersten bevorzugten Ausführungsform des erfindungsgemäßen Verfahrens;
- Fig. 2 in stark vereinfachter Darstellung ein Verfahrensschema einer zweiten bevorzugten Ausführungsform des erfindungsgemäßen Verfahrens;
- Fig. 3 in Diagrammform den Einfluss des Feuchtigkeitsgehaltes der Biomasse auf den gespaltenen Anteil von raffiniertem Schweröl gemäß Beispiel 1;
- Fig. 4 in Diagrammform den Einfluss des Feuchtigkeitsgehaltes der Biomasse auf den gespaltenen Anteil von Vakuumgasöl gemäß Beispiel 2.

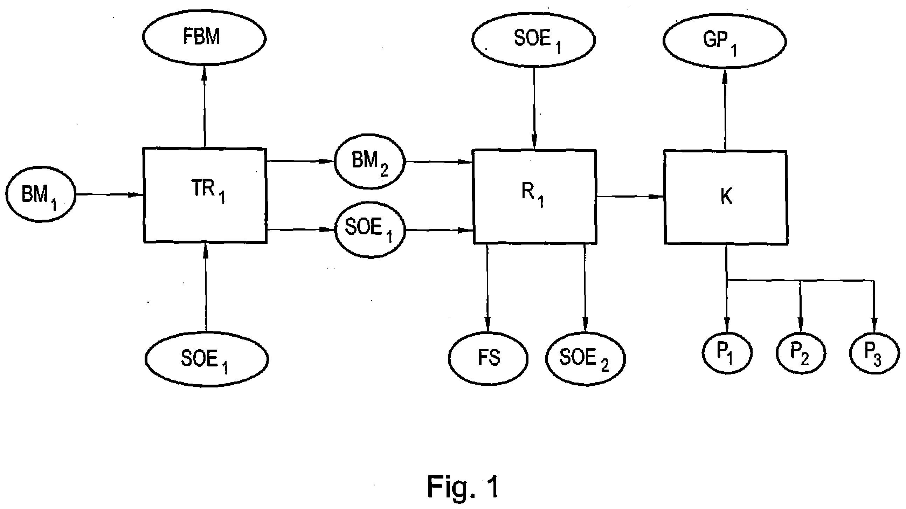

Das erfindungsgemäße Verfahren kann in einer Anlage durchgeführt werden, wie sie stark vereinfacht in Fig. 1 gezeigt wird.

Wie in Fig. 1 ersichtlich, umfasst die Anlage im Wesentlichen einen Trockner TR₁, einen Reaktor R₁ und einen Kondensator K. Im Trockner TR₁ wird die Biomasse BM₁ bei Temperaturen zwischen etwa 110°C und 200°C vorgetrocknet und durch Rühren mit dem Schweröl SOE₁ kontaktiert. Biomasse BM₁ und Schweröl SOE₁ können auch gemeinsam dem Trockner TR₁ zugeführt werden. Die dabei aus der Biomasse austretende Feuchte FBM wird beispielsweise in einem separaten Kondensator, der in Fig. 1 nicht gezeigt ist, gesammelt.

Der Reaktor R₁ besteht aus einem beheizten Rührkessel, indem die getrocknete Biomasse BM₂ im Schweröl SOE₁ bei Temperaturen zwischen 250°C und 450°C dispergiert und anschließend zu den Produkten umgesetzt wird. Dem Reaktor R₁ kann das Schweröl SOE₁ auch direkt zugeführt werden. Trockner TR₁ und Reaktor R₁ sind mit einer Inertisationsanlage ausgestattet, die durch Aufrechterhalten eines geringen Überdrucks von beispielsweise 35 mbar in der Anlage ein Eintreten von Sauerstoff verhindert. Der beim Cracken entstehende kohlenartige Feststoff FS sowie ein Überschuss an Schweröl SOE₂ werden aus dem Reaktor R₁ abgezogen und anschließend einer Aufreinigungseinheit, die nicht dargestellt ist, zugeführt. Die übrigen Produkte gelangen in den Kondensator K. In diesem werden die kondensierbaren Bestandteile auskondensiert und in ölhaltige Produktphasen P₁ und P₂ und in eine wasserhaltige Produktphase P₃ aufgetrennt. Weiters verlässt eine Gasphase GP₁ den Kondensator K.

Eine bevorzugte erste Ausführungsform des erfindungsgemäßen Verfahrens wird wie folgt durchgeführt:
Der Reaktor R₁ und der Trockner TR₁ werden mit dem Schweröl SOE₁, beispielsweise einem Vakuumgasöl (VGO) befüllt und aufgeheizt. Der Reaktor R₁ wird auf eine Temperatur von 320°C bis 400°C und der Trockner auf 150°C aufgeheizt. Als Biomasse BM₁ werden vorgetrocknete Holzspäne mit einer Ausgangsfeuchte von etwa 10 Gew.-% Feuchtegehalt verwendet. Diese Biomasse wird kontinuierlich aus einem Vorratsbehälter in den mit VGO gefüllten Trockner TR₁ eingebracht. Die Biomasse wird im Trockner TR₁ mittels eines Rührers im VGO verteilt und dabei wird das in der Biomasse physikalisch gebundene Wasser ausgetrieben. Diese Vortrocknung im Trockner TR₁ bis zu einem Feuchtigkeitsgehalt von maximal 1 Gew.-%, bezogen auf die Biomasse, ist notwendig, um den Anteil des in den Reaktor R₁ eingebrachten Wassers zu reduzieren. Somit vermindert sich der Anteil an ungespaltenem Schweröl im Reaktor R₁, welches durch den aufsteigenden Dampf sonst unerwünscht in die Produktölphase verschleppt wird. Durch die Trocknung der Biomasse im Trockner TR₁ werden vorteilhaft auch die Mengen an anfallenden Recyclingströmen für eine anschließende Aufarbeitung reduziert.

Nach der Trocknung der Biomasse BM₂ wird diese in den Reaktor R₁ gefahren, indem die eigentliche Spaltung des Schweröls (VGO) und - parallel dazu - die Flüssigphasenpyrolyse stattfinden. Im Reaktor herrschen beispielsweise Temperaturen zwischen 320 und 400 °C bei Normaldruck.

Durch die Zufuhr von Biomasse finden im Reaktor R₁ zwei Vorgänge statt. Ein Teil des eingesetzten Schweröls VGO wird dabei durch die katalytische Wirkung der Biomasse in direkt kondensierbare Produkte (Alkene) gespalten, welches die eigentliche Produktölphase dieses Verfahrens darstellt. Die eingebrachte, getrocknete Biomasse BM₂ wird einer Flüssigphasenpyrolyse unterzogen und dabei in ein Pyrolysegas, Pyrolysekohle und ein Pyrolyseöl umgesetzt. Die im Reaktor entstehenden Produktgase werden einem Kondensator K zugeführt und der Anteil an direkt verflüssigbaren Komponenten auskondensiert. Das anfallende Kondensationsgemisch wird in einer flüssig-flüssig Separation vom anfallenden Pyrolyseöl (wässrig) getrennt und wird danach einer Rektifikation zur Abtrennung des ungespaltenen Schweröls zugeführt. Das rückgewonnene Schweröl wird anschließend wieder in den Reaktor zurückgeführt.

Mit fortschreitender Betriebsdauer sammeln sich im Schweröl SOE₂ die durch die Pyrolyse anfallenden Feststoffe FS als Kohle an und diese müssen mit einer fest-flüssig Separation aus dem Schweröl SOE₂ abgetrennt werden. Diese Feststoffe FS können im Anschluss an die Separation entweder durch Extraktion vom darin gebundenen Schweröl befreit werden, oder direkt mit dem anhaftenden Schweröl (bei einem Schwerölgehalt um etwa 50%) thermisch verwertet werden.

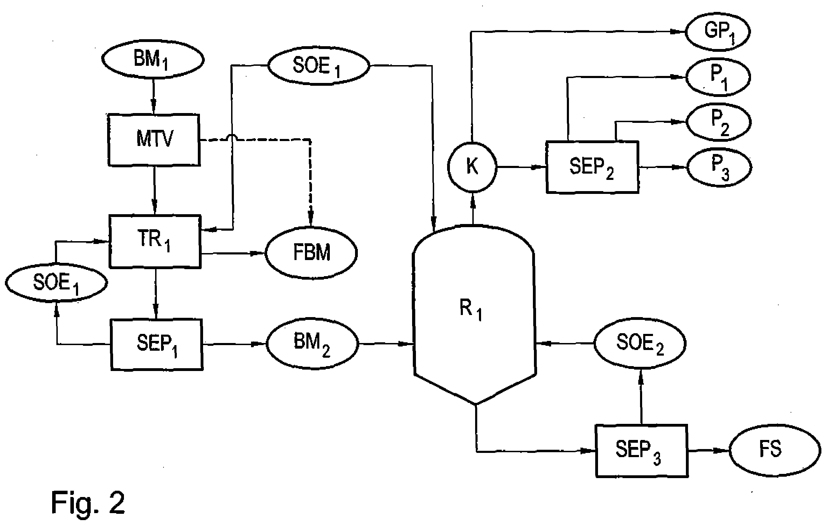

Fig. 2 zeigt stark vereinfacht eine zweite bevorzugte Ausführungsform eines erfindungsgemäßen Verfahrens zur kontinuierlichen Gewinnung eines Brenn- bzw. Treibstoffes. Biomasse BM₁ wird dabei in einer mechanischen-thermischen Vorbehandlungseinheit MTV beispielsweise in einer oder mehreren Mühlen auf ein Partikelvolumen unter 125 mm³ zerkleinert. Bereits während des mechanischen Zerkleinerns in der Vorbehandlungseinheit MTV kann weiters die Ausgangsfeuchte der Biomasse um einen Feuchteanteil FBM reduziert werden, oder aber in einem nachfolgenden thermischen Trockner behandelt werden. Der Feuchteanteil FBM aus der Biomasse wird dazu beispielsweise in einen Kondensatabscheider abgeschieden.

Anschließend wird die zerkleinerte Biomasse in einer Trocknung TR₁ mit dem vorgewärmten Schweröl SOE₁ kontaktiert und bei Temperaturen zwischen 110°C und 200°C getrocknet. Die Trocknung TR₁ umfasst zum intensiven Kontakt von Biomasse und Schweröl eine Misch- und gegebenenfalls auch eine Fördereinrichtung. In der Trocknung TR₁ wird die Biomasse durch den intensiven Kontakt vorgewärmt und auf einen Feuchtegehalt von maximal 1,0 Gew.-%, bezogen auf die Biomasse, getrocknet. Der kondensierte Feuchteanteil der Biomasse FBM wird aus dem Trockner TR₁ abgeleitet und ebenfalls in einem Kondensatabscheider gesammelt.

Die solcherart vorbehandelte Biomasse BM₂ wird einem nächsten Behandlungsschritt SEP₁ zugeführt, in dem eine mechanische Entölung der Biomasse erfolgt und das überschüssige Schweröl SOE₁ wieder abgetrennt und in den Trockner TR₁ zurückgeführt wird. Der Anteil der Biomasse BM₂ im Schweröl SOE₁ wird dabei vorzugsweise auf über 25 Gew.-%, bezogen auf die Gesamtmasse, eingestellt. Somit wird erreicht, dass ein möglichst kleiner Anteil an Schweröl SOE₁ mit einer Temperatur von max. 200°C in die nachfolgende Reaktoreinheit R₁ gelangt und diese zu stark abkühlt. Je nach Anforderung bzw. Zusammensetzung der eingesetzten Biomasse können im Behandlungsschritt SEP₁ beispielsweise Siebe, Schneckenpressen oder Dekanter zur Abtrennung des überschüssigen Schweröls von der Biomasse eingesetzt werden. Die Temperatur der Edukte wird während des Behandlungsschritts SEP₁ weiterhin zwischen 110°C und 200°C gehalten.

Die getrocknete Biomasse BM₂ wird in die Reaktoreinheit R₁ eingebracht, in der die folgenden Reaktionsbedingungen herrschen: Temperaturen zwischen 250°C und 450°C bei Drücken zwischen 0,1 bar und 80 bar, vorzugsweise bei einem Überdruck kleiner als 100 mbar gegenüber dem Atmosphärendruck. Aus Sicherheitsgründen ist die Reaktoreinheit mit einer Inertisationsanlage versehen und wird mit einem inerten Schutzgas überlagert. Die Reaktoreinheit R₁ umfasst einen Reaktor mit entsprechenden Auslässen zur Dampfabfuhr und zum Abzug der flüssigen Produktphasen, sowie zumindest eine Rühr- und/oder Dispergiervorrichtung. Weiters sind Heizvorrichtungen vorgesehen.

Das dampfförmige Kopfprodukt aus dem Reaktor R₁ gelangt in einen Kondensator K. Zur Kondensation der Dampfphase kann der Kondensator K auch mehrstufig ausgeführt sein und ist für Kondensationstemperaturen zwischen 450°C und etwa 30°C ausgelegt. Der Kondensator K kann beispielsweise als Rohrbündelwärmetauscher oder als Sprühkühler ausgeführt sein und dient zur Trennung der flüssigen Produktphasen von den nicht kondensierbaren Gasen, die als Gasphase GP₁ aus dem Verfahren ausgeschleust werden.

In der Trenneinheit SEP₂ werden die flüssigen Produktphasen entsprechend ihrer Dichten mit Hilfe beispielsweise von Fliehkraft- und/oder Schwerkraftabscheidern in unterschiedliche Fraktionen getrennt. Weiters können die Fraktionen in hydrophile sowie hydrophobe Phasen getrennt werden. Es werden mehrere Produktphasen P₁, P₂, P₃ erhalten, wobei beispielsweise P₃ eine wasserreiche Phase ist. Die ölreichen Produktphasen P₁, P₂ stehen je nach ihrer Zusammensetzung zumindest als Ausgangsprodukte für die weitere Verwertung als Brenn- bzw. Treibstoffe zur Verfügung.

In der Trenneinheit SEP₃ erfolgt die Abtrennung der Sumpfprodukte der Crack-Reaktion aus dem Reaktor R₁. Feststoffe FS, beispielsweise Kohle, mineralische Asche sowie nicht vollständig umgesetzte Biomasse, werden bei Betriebstemperaturen zwischen 80°C und 450°C vom überschüssigen, schwer siedenden Anteil des Schweröls SOE₂ abgetrennt und aus dem Verfahren ausgeschleust. Das abgetrennte Schweröl SOE₂ wird wieder in den Reaktor R₁ zurückgeführt und kann erneut in Anwesenheit von Biomasse gecrackt werden.

### Beispiel 1:

Die bei dem hier dargestellten Beispiel 1 angewendeten Bedingungen sind nachfolgend aufgelistet.

Zur Untersuchung des Einflusses der Biomassefeuchte auf die wirtschaftliche und effiziente Spaltung von schwersiedendem Öl wurde eine Versuchsreihe durchgeführt. Als Schweröl wurde jeweils ein hochsiedendes, raffiniertes Mineralöl mit einem Siedebeginn über 400°C (bei einem Druck von 1 bar) und einem Modalwert der Moleküllänge bei C₃₆H₇₄ eingesetzt. Durch die Trocknung der Biomasse auf einen Feuchtigkeitsgehalt von maximal 1,0 Gew.-% konnte eine deutliche Steigerung der Effizienz der erwünschten Spaltung des Schweröls hin zu leichter siedenden Fraktionen erreicht werden.

Versuchsbedingungen:

| | |
|---|---|
| Reaktortemperatur: | 350°C |
| Reaktordruck: | 10 mbar Überdruck über Atmosphärendruck |
| Schweröl: | Phi-Oil Katstart Gold 25 |
| Biomasse: | rindenfreie Fichtenholzspäne vorbehandelt auf unterschiedliche Restfeuchte vor Eintritt in den Reaktor |

Die Versuchsanlage wurde bei jedem Versuch jeweils mit etwa 1600 g Schweröl befüllt, auf 350°C Temperatur aufgeheizt und während 20 min auf dieser Temperatur gehalten. Ohne Zugabe von Biomasse konnte dabei keine Bildung an Spaltprodukten durch thermisches Cracken des Schweröls festgestellt werden. Je Versuch wurden insgesamt 270 g an Biomasse schrittweise in Portionen von etwa 10 g über 2,5 Stunden dem Schweröl, das weiterhin auf 350°C gehalten wurde, zugegeben. Die Biomasse wurde dabei derart vorgetrocknet, dass sie bei jedem Versuch einen anderen Feuchtigkeitsgehalt aufwies.

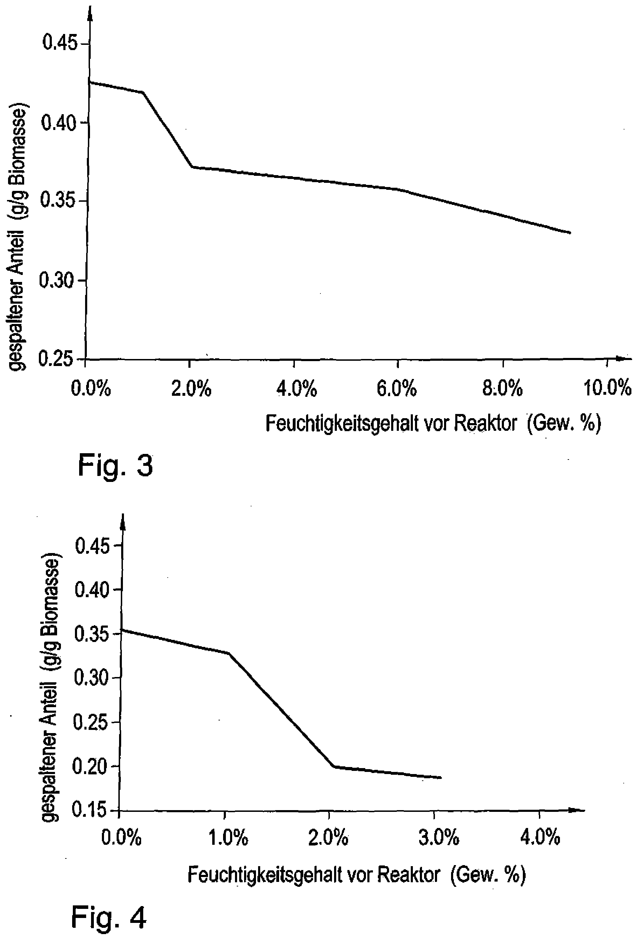

Fig. 3 fasst die Versuchsergebnisse zusammen und zeigt in Diagrammform den Einfluss des Feuchtigkeitsgehalts der Biomasse auf die Spaltung von hochsiedendem, raffiniertem Schweröl. Der Anteil an gespaltenem Schweröl wurde dabei mittels Auftrennung im Gaschromatographen und Auswertung über Massenspektrometer ermittelt. Ein durch Trocknung der Biomasse reduzierter Feuchtigkeitsgehalt auf maximal 1 Gew.-%, bezogen auf die Biomasse, ergab eine bis zu etwa 30%ige gesteigerte Ausbeute an Spaltprodukten gegenüber Versuchen, bei denen der Feuchtigkeitsgehalt der Biomasse bei 2 Gew.-% oder darüber eingestellt wurde.

### Beispiel 2:

Zur Untersuchung des Einflusses der Vorbehandlung der Biomasse mit heißem Schweröl wurde eine Versuchsreihe mit unterschiedlich langer Vorbehandlung der Biomasse durchgeführt. Als Schweröl wurde ein Vakuumgasöl mit einem Siedebeginn von etwa 375°C (bei einem Druck von 1 bar) eingesetzt. Durch die Konditionierung der Biomasse auf einen Feuchtigkeitsgehalt von max. 1 Gew.-%, bezogen auf die Biomasse, konnte eine deutliche Steigerung der Effizienz der erwünschten Spaltung des Schweröls hin zu leichter siedenden Fraktionen erreicht werden.

Versuchsbedingungen:

| | |
|---|---|
| Reaktortemperatur: | 350°C |
| Reaktordruck: | 10 mbar Überdruck über Atmosphärendruck |
| Schweröl: | Vakuumgasöl (VGO) |
| Biomasse: | rindenfreie Fichtenholzspäne vorbehandelt auf unterschiedliche Restfeuchte vor Eintritt in den Reaktor |

Die Versuchsanlage wurde bei jedem Versuch mit etwa 1300 g Öl befüllt, auf SollTemperatur von 350°C aufgeheizt und während 20 min auf dieser Temperatur gehalten. Ohne Zugabe von Biomasse konnte während dieser Zeitdauer keine Produktbildung durch thermisches Cracken des Schweröls festgestellt werden. Anschließend wurden je Versuch insgesamt 270 g Biomasse schrittweise in Portionen von etwa 10 g über 2,5 Stunden zugegeben. Während dieser Versuchsdauer wurde das Schweröl weiterhin auf einer Temperatur von 350°C gehalten. Die zugegebene Biomasse wurde dabei zuvor in Schweröl VGO bei einer Temperatur von etwa 150°C derart vorbehandelt, dass sie je Versuch einen anderen Feuchtigkeitsgehalt aufwies. Vor Zugabe in den Reaktor wurde die Biomasse mechanisch durch Filtrieren auf einen Feststoffgehalt von über 75 Gew.-%, bezogen auf die Gesamtmasse, gebracht und lag folglich als Filterrückstand vor.

Fig. 4 fasst die Ergebnisse zusammen und zeigt in Diagrammform den Einfluss des Feuchtigkeitsgehalts der im Schweröl VGO vorbehandelten Biomasse auf die Spaltung von hochsiedendem, raffiniertem Schweröl VGO. Der Anteil an gespaltenem Schweröl wurde dabei wiederum mittels Auftrennung im Gaschromatographen und Auswertung über Massenspektrometer ermittelt. Ein durch Trocknung der Biomasse in erhitztem Schweröl reduzierter Feuchtigkeitsgehalt auf maximal 1 Gew.-%, bezogen auf die Biomasse, ergab ebenfalls eine gesteigerte Ausbeute an Spaltprodukten gegenüber Versuchen, bei denen der Feuchtigkeitsgehalt der Biomasse bei 2 Gew.-% oder darüber eingestellt wurde.

Die Versuche sowohl in Beispiel 1, als auch in Beispiel 2 wurden jeweils ohne Zusatz eines Katalysators durchgeführt. Untersuchungen unter Zusatz von aus der einschlägigen Literatur bekannten mineralischen oder silikatischen Katalysatoren zeigten ebenfalls denselben Trend, dass bei einem Feuchtigkeitsgehalt von maximal 1 Gew.-%, bezogen auf die Biomasse, der Umsatz an erwünschten Spaltprodukten deutlich höher war als bei höheren Feuchten der zugeführten Biomasse. Generell wurde durch Zusatz der untersuchten Katalysatoren der erzielte Umsatz an Spaltprodukten kaum erhöht und war im Wesentlichen gleich wie bei Vergleichsversuchen ohne Zusatz eines Katalysators.

Vorteilhaft kann daher beim erfindungsgemäßen Verfahren zur Gewinnung eines Brenn- bzw. Treibstoffes auf den Einsatz mineralischer oder silikatischer Katalysatoren verzichtet werden.

## Patentansprüche

1. Verfahren zur Gewinnung eines Brenn- bzw. Treibstoffes durch thermisches Cracken eines Schweröls in Gegenwart von feuchter, kohlenwasserstoffhältiger Biomasse, indem das Schweröl bis zur Pyrolyse der kohlenwasserstoffhältigen Biomasse erhitzt wird, wobei die Brenn- bzw. Treibstoffe gebildet, aus dem erhitzten Schweröl entfernt und anschließend kondensiert werden, wobei eine kohlenwasserstoffhältige Biomasse eingesetzt wird, deren Feuchtigkeitsgehalt maximal 1,0 Gew.-%, bezogen auf die Biomasse, beträgt und durch Trocknen in einem erhitzten Schweröl, vorzugsweise Vakuumgasöl, bei Temperaturen bis maximal 200°C eingestellt wurde.

2. Verfahren nach Anspruch 1, **dadurch gekennzeichnet, dass** eine kohlenwasserstoffhältige Biomasse eingesetzt wird, deren Feuchtigkeitsgehalt maximal 0,5 Gew.-%, bezogen auf die Biomasse, beträgt.

## Claims

1. A process for obtaining a combustible or a fuel respectively, by thermally cracking a heavy oil in the presence of a wet, hydrocarbonaceous biomass, by heating the heavy oil until the pyrolysis of the hydrocarbonaceous biomass, whereby the combustibles and fuels, respectively, are formed, removed from the heated heavy oil, and subsequently condensed, wherein a hydrocarbonaceous biomass having a moisture content of a maximum of 1.0 wt.-% based on the biomass, said moisture content having been adjusted by drying in a heated heavy oil, preferably vacuum gas oil, at temperatures up to a maximum of 200°C, is used.

2. A process according to claim 1, **characterised in that** a hydrocarbonaceous biomass having a moisture content of a maximum of 0.5 wt.-% based on the biomass is used.

## Revendications

1. Procédé d'obtention d'un combustible ou d'un carburant, respectivement, par craquage thermique d'une huile lourde en présence d'une biomasse humide contenant des hydrocarbures, en chauffant l'huile lourde jusqu'à la pyrolyse de la biomasse contenant des hydrocarbures, dans lequel les combustibles ou carburants sont formés, retirés de l'huile lourde chauffée et ensuite condensés, dans lequel on utilise une biomasse contenant des hydrocarbures dont la teneur en humidité est au maximum de 1,0 % en poids par rapport à la biomasse et a été réglée par séchage dans une huile lourde chauffée, de préférence dans du gasoil sous vide à des températures de 200°C au maximum.

2. Procédé selon la revendication 1, **caractérisé en ce qu'**on utilise une biomasse contenant des hydrocarbures dont la teneur en humidité est au maximum de 0,5 % en poids par rapport à la biomasse.
